# EUROPÄISCHE PATENTSCHRIFT

(11) **EP 0 628 588 B1**
(45) Veröffentlichungstag und Bekanntmachung des Hinweises auf die Patenterteilung: **20.08.1997**
(21) Anmeldenummer: 94810319.7
(22) Anmeldetag: 31.05.1994
(51) Int. Cl.: C08G 69/48, C08G 69/28, C08G 73/12, C08K 5/5333

(54) **Molekulargewichtserhöhung von Polyamiden**
Molecular weight-increasing of polyamides
Accroissement du poids moléculaire de polyamides

(30) Priorität: 07.06.1993 CH 1694/93
(43) Veröffentlichungstag der Anmeldung: 14.12.1994
(73) Patentinhaber: Ciba Specialty Chemicals Holding Inc., 4057 Basel (CH)
(72) Erfinder: Pfaendner, Rudolf, Dr., D-64668 Rimbach/Odenwald 1 (DE); Hoffmann, Kurt, Dr., D-64686 Lautertal 1 (DE); Herbst, Heinz, Dr., D-64686 Lautertal-Reichenbach (DE)

(56) Entgegenhaltungen:
- EP-A- 0 353 969
- US-A- 5 116 919
- US-A- 5 142 000

## Beschreibung

Die Erfindung betrifft ein Verfahren zur Molekulargewichtserhöhung von Polyamiden sowie die nach dem Verfahren erhältlichen Polyamide.

Polyamide sind wichtige thermoplastische Werkstoffe aus der Gruppe der technischen Kunststoffe mit hoher Festigkeit, Steifigkeit, Härte und Wärmeformbeständigkeit. Diese mechanischen und physikalischen Eigenschaften hängen entscheidend vom Molekulargewicht des Polymeren ab. Eine hochwertige Wiederverwertung von gebrauchten Polyamiden und von Produktionsabfällen z.B. aus der Faserproduktion und dem Spritzgiessbereich ist aufgrund reduzierten Molekulargewichts ohne eine Nachbehandlung nur eingeschränkt möglich.

Eine Verbesserung der Materialeigenschaften von gebrauchten beziehungsweise thermisch oder hydrolytisch vorgeschädigten Polyamiden, wobei die Schädigung typischerweise mit einer Molekulargewichtserniedrigung einhergeht, ist grundsätzlich bekannt. Als Polykondensationsprodukte sind Polyamide beispielsweise einer Nachkondensation im festen Zustand zugänglich (S. Fakirov, Kunststoffe 74 (1984), 218 und R.E. Grützner, A. Koine, Kunststoffe 82 (1992), 284). Diese Methode ist jedoch langwierig und reagiert darüber hinaus empfindlich auf Verunreinigungen, wie sie in Altmaterial zugegen sein können.

Weiterhin wurde zur Festphasenkondensation von Polyamiden in der EP-0 410 230 vorgeschlagen, Phosphorsäure, phosphorige oder phosphonige Säure als Katalysator zu verwenden.

Die EP-A-353 969 schlägt zur Erhöhung des Molekulargwichts von Polyamid ein Verfahren vor, bei welchem spezifische Phosphonsäurederivate, wie z. B. C₆H₅(CH₂)₃PO₃H₂, als Katalysatoren eingesetzt werden. Bei dem Verfahren wird das Polyamid mit dem Katalysator zunächst auf 280°+/- 1° C in einem geschlossenen Gefäss mit Ventil erhitzt, wobei ein Dampfdruck von 780 mm eingestellt wird. Der Dampfdruck wird anschliessend auf 100 mm reduziert, und die Polymerisation dadurch ausgelöst.

Aufgabe der vorliegenden Erfindung war daher die Entwicklung eines Verfahrens, das eine wesentliche Molekulargewichtserhöhung von Polyamiden in verhältnismässig kurzer Zeit erlaubt.

Überraschenderweise gelingt durch Aufschmelzen und durch Zusatz eines Gemisches mindestens eines Bismaleinimides und eines sterisch gehinderten Hydroxyphenyl-alkyl-phosphonsäureesters bzw. -halbesters zu Polyamid eine wesentliche Molekulargewichtserhöhung des Polyamids. Diese Molekulargewichtserhöhung bewirkt eine Eigenschaftsverbesserung der Polyamide, insbesondere im Spritzgiessbereich und bei Recyclaten. Mit Hilfe des erfindungsgemässen Verfahrens kann man insbesondere bei Polyamidrecyclaten aus der Sammlung gebrauchter technischer Teile aus Automobil- und Elektroanwendungen eine Molekulargewichtserhöhung erreichen.

Gegenstand der Erfindung ist somit ein Verfahren zur Molekulargewichtserhöhung von Polyamiden, dadurch gekennzeichnet, dass man ein Polyamid unter Zusatz eines Bismaleinimides und eines sterisch gehinderten Hydroxyphenyl-alkyl-phosphonsäureesters bzw. -halbesters oberhalb des Schmelzpunktes (bei kristallinen Polyamidtypen) bzw. Glaspunktes (bei amorphen Polyamidtypen) des Polyamids erhitzt.

Unter Polyamiden, d.h. sowohl Neu-Polyamiden wie Polyamid-Recyclaten, sind aliphatische und aromatische Polyamide oder Copolyamide, die sich von Diaminen und Dicarbonsäuren und/oder von Aminocarbonsäuren oder den entsprechenden Lactamen ableiten, zu verstehen. Geeignete Polyamide sind beispielsweise:
PA 6, PA 11, PA 12, PA 46, PA 66, PA 69, PA 610, PA 612, sowie auch amorphe Polyamide vom Typ Trogamid PA 6-3-T und Grilamid TR 55. Polyamide der genannten Art sind allgemein bekannt und im Handel erhältlich.

Besondere Bedeutung erlangt die Erfindung bei Polyamid-Recyclaten, wie sie bei Produktionsabfällen, Wertstoffsammlungen oder durch sogenannte Rücknahmeverpflichtungen z.B. bei der Automobilindustrie oder im Elektrobereich gewonnen werden. Die Polyamid-Recyclate sind dabei in vielfältiger Weise thermisch und/oder hydrolytisch geschädigt. Dabei kann es sich grundsätzlich um die bereits angegebenen Polyamide handeln; es können aber auch, bedingt durch die Art der Sammlung, Gemische beispielsweise von Polyamid-6 und Polyamid-6.6 eingesetzt werden. Ausserdem können diese Recyclate auch in untergeordneten Mengen Beimischungen von Kunststoffen anderer Struktur wie beispielsweise Styrolpolymere (ABS, ASA) oder Polyester enthalten, sowie auch übliche Verunreinigungen wie z.B. Lackreste, Metallspuren, Treibstoffreste oder auch Wasserspuren.

Vorzugsweise werden als Polyamide PA 6 und PA 6.6 oder ihre Mischungen, sowie Recyclate auf dieser Basis eingesetzt.

Bismaleinimide (BMI) im Sinne dieser Erfindung können- durch die folgende Formel (I) dargestellt werden: 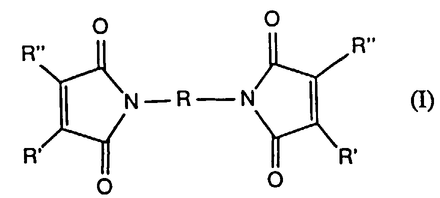 wobei R ein aliphatischer, aromatischer, cycloaliphatischer oder heterocyclischer Rest; und
R' und R'' unabhängig voneinander Wasserstoff, C₁-C₄-Alkyl, C₁-C₆-Alkoxy, Phenyl oder Phenyloxy bedeuten.

Die aliphatischen, aromatischen, cycloaliphatischen oder heterocyclischen Reste weisen maximal 40 C-Atome auf, sie können unsubstituiert oder substituiert sein, auch können die genannten Reste durch -O-, -S-, -(CH₂)₁₋₆-, -C(O)- , -P(O)(C₁-C₁₈-Alkyl)- oder -S(O₂)-(was für den Rest 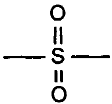 steht) unterbrochen sein. Beispiele für mögliche Substituenten sind: C₁-C₁₈-Alkyl, C₁-C₁₈-Alkoxy, OH, Phenyl und Phenyloxy.

R ist als aliphatischer Rest beispielsweise ein C₁-C₁₈-Polymethylenrest, der sich von Alkylresten, wie Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl, n-Dodecyl, n-Tridecyl, n-Tetradecyl, n-Hexadecyl oder n-Octadecyl sowie weiteren verzweigten Isomeren, ableiten lässt.

R ist als aromatischer Rest beispielsweise ein Rest mit 6-40 C-Atomen, wie Phenylen, Biphenylen, Naphthylen oder steht für durch eine der Gruppen wie -O-, -S-, -(CH₂)₁₋₆-, -C(O)-, -P(O)(C₁-C₁₈-Alkyl)- oder -S(O₂)- verbundene Phenylen- oder Biphenylen-Reste.

R ist als cycloaliphatischer Rest beispielsweise ein Rest mit 5-10 C-Atomen, wie Cyclopentylen, Cyclohexylen oder Cyclooctylen.

R ist als heterocyclischer Rest beispielsweise ein N-haltiger 5- oder 6-Ring, wie Pyridylen, Pyridazylen oder Pyrazolylen.

Bevorzugt bedeutet R einen aromatischen Rest einer der Formeln: 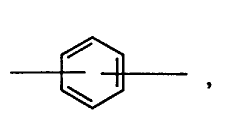 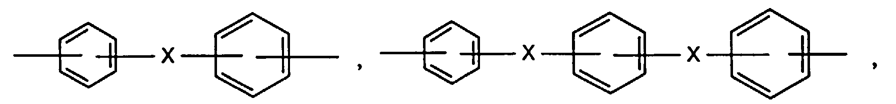 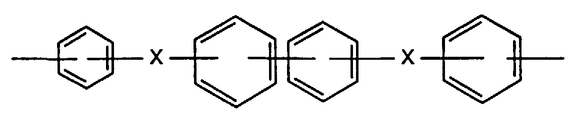 oder 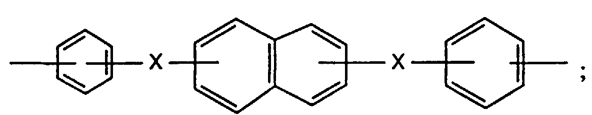 wobei X einen der Reste -CH₂-, -C(O)-, -P(O)(C₁-C₁₈-Alkyl)-, -S(O₂)-, -O- oder -S- bedeutet.

Bevorzugt bedeutet R' und R'' unabhängig voneinander Wasserstoff oder C₁-C₄-Alkyl, besonders bevorzugt ist R' Wasserstoff und R'' Wasserstoff oder Methyl und ganz besonders bevorzugt ist R' und R'' Wasserstoff.

Ganz besonders bevorzugt sind Verbindungen der Formel 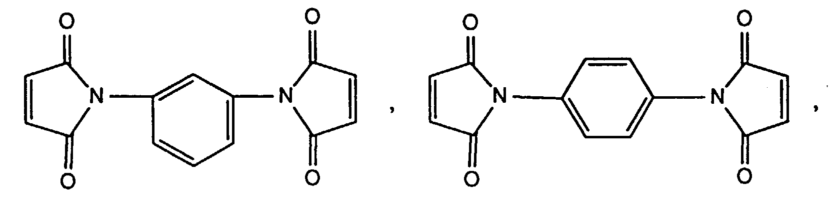 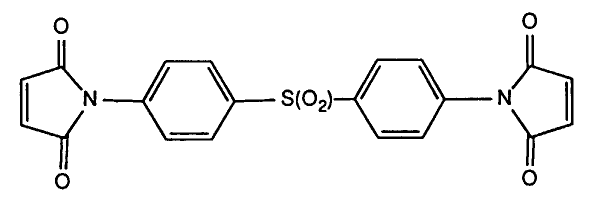 oder

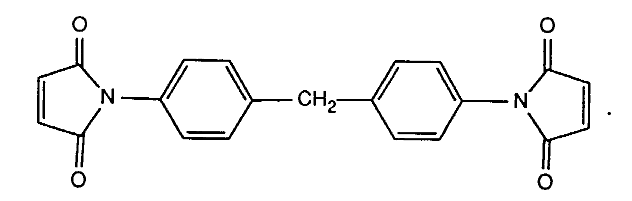

Sterisch gehinderte Hydroxyphenyl-alkyl-phosphonsäureester bzw. -halbester sind beispielsweise aus US 4,778,840 bekannt. Sie können durch die folgende Formel beschrieben werden: 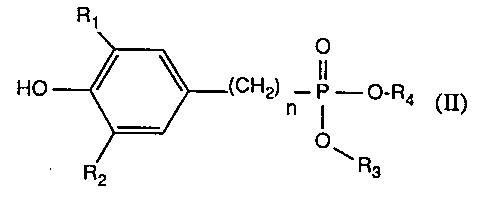 worin
R₁ iso-Propyl, tert.-Butyl, Cyclohexyl oder mit 1-3 C₁-C₄-Alkylgruppen substituiertes Cyclohexyl;
R₂ H, C₁-C₄-Alkyl, Cyclohexyl oder mit 1-3 C₁-C₄-Alkylgruppen substituiertes Cyclohexyl;
R₃ C₁-C₂₀-Alkyl oder substituiertes oder unsubstituiertes Phenyl oder Naphthyl;
R₄ H, M²⁺/2, C₁-C₂₀-Alkyl oder substituiertes oder unsubstituiertes Phenyl oder Naphthyl;
M²⁺ ein zweiwertiges Metallkation und
n 1-6
bedeuten.

Bedeuten Substituenten Alkyl mit bis zu 8 Kohlenstoffatomen, so kommen hierfür die Reste wie Methyl, Ethyl, Propyl, Butyl, Pentyl, Hexyl, Octyl, Stearyl oder Lauryl sowie entsprechende verzweigte Isomere in Frage, bevorzugt sind C₂-C₄-Alkyl.

Als Substituenten für die Phenyl- oder Naphthyl-Reste kommen beispielsweise C₁-C₄-Alkyl-gruppen in Frage.

Als zweiwertige Metallkationen kommen beispielsweise Zn, Ba, Ca und Mg in Frage. Besonders bevorzugt ist Ca.

Bevorzugte Verbindungen der Formel (II) sind diejenigen, welche mindestens eine tert.-Butylgruppe als Rest R₁ oder R₂ aufweisen. Ganz besonders bevorzugt sind Verbindungen bei denen R₁ und R₂ die Bedeutung tert.-Butyl (in den Formeln: 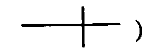 haben.

Bevorzugt bedeutet n 1 oder 2 und ganz besonders bevorzugt 1.

Ganz besonders bevorzugte sterisch gehinderte Hydroxyphenyl-alkyl-phosphonsäureester bzw. -halbester sind

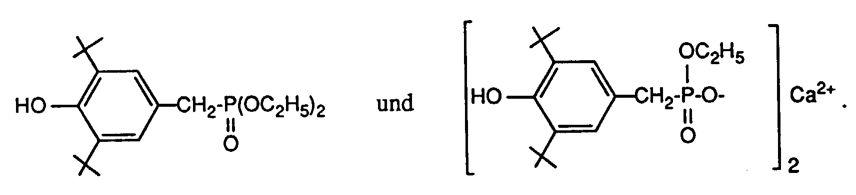

Gegebenenfalls kann eine Mischung verschiedener Bismaleinimide und/oder verschiedener sterisch gehinderter Hydroxyphenyl-alkyl-phosphonsäureester bzw. -halbester eingesetzt werden.

Die Durchführung des Verfahrens kann in jeglichen beheizbaren und mit einer Rührvorrichtung ausgestatteten Gefässen erfolgen, dies können beispielsweise geschlossene Apparate unter Ausschluss von Luftsauerstoff, z.B. unter einer Inertgasatmosphere (N₂), sein. Vorzugsweise wird das Verfahren in einem Extruder durchgeführt.

Das zu erhitzende Polyamidmaterial und die Mischung von BMI und Hydroxyphenyl-alkyl-phosphonsäureester bzw. -halbester werden üblicherweise am Anfang der Erhitzung in den Apparat eingefüllt, eine nachträgliche Dosierung der BMI-Hydroxyphenyl-alkyl-phosphonsäureester bzw. -halbester-Mischung zu dem Polyamid ist jedoch auch möglich, wobei die Mischung als solche oder aber auch die Einzelkomponenten in beliebiger Reihenfolge zugegeben werden können. Die Erhitzung oberhalb des Schmelz- bzw. Glaspunktes wird im allgemeinen bis zu einer homogenen Verteilung der BMI-Hydroxyphenyl-alkyl-phosphonsäureester bzw. -halbester-Mischung unter Rühren durchgeführt. Die Temperatur richtet sich dabei nach dem verwendeten Polyamid. Bei kristallinen Polyamiden arbeitet man vorzugsweise im Bereich zwischen Schmelztemperatur und einer Temperatur etwa 50°C oberhalb der Schmelztemperatur. Bei amorphen Polyamiden erfolgt das Verfahren etwa im Bereich zwischen 50°C und 150°C oberhalb der jeweiligen Glasübergangstemperatur.

Das BMI und der Hydroxyphenyl-alkyl-phosphonsäureester bzw. -halbester können für die Zugabe unabhängig voneinander als Flüssigkeit, Pulver, Granulat oder in kompaktierter Form oder auch auf einem Trägermaterial, wie Kieselgel oder zusammen mit einem Polymerpulver oder Wachs, wie einem Polyethylenwachs, vorliegen.

Zu je 100 Teilen Polyamid gibt man vorzugsweise 0,05 bis 10 Teile eines Bismaleinimides und 0,01 bis 5 Teile eines Hydroxyphenyl-alkyl-phosphonsäureesters bzw. -halbesters. Besonders bevorzugt werden dabei 0,1 bis 5 Teile Bismaleinimid und 0,05 bis 2 Teile Hydroxyphenyl-alkyl-phosphonsäureester bzw. -halbester eingesetzt. Ganz besonders bevorzugt werden dabei 0,1 bis 1 Teil Bismaleinimid und 0,05 bis 0,5 Teile Hydroxyphenyl-alkyl-phosphonsäureester bzw. -halbester eingesetzt. Die Menge an Bismaleinimid und Hydroxyphenyl-alkyl-phosphonsäureester bzw. -halbester richtet sich dabei nach dem Ausgangsmolekulargewicht des Polymeren und nach dem gewünschten Endmolekulargewicht. So wird man bei einem stark geschädigten Polyamid, d.h. mit einem niedrigen Molekulargweicht, bevorzugt Bismaleinimid und Hydroxyphenyl-alkyl-phosphonsäureester bzw. -halbester im oberen Gewichtsbereich einsetzen. Ist dagegen nur eine geringe Molekulargewichtserhöhung oder nur eine Verarbeitungsstabilisierung gewünscht, so wird man bevorzugt ein Bismaleinimid und einen Hydroxyphenyl-alkyl-phosphonsäureester bzw. -halbester in niedriger Konzentration einsetzen.

Zusätzlich zu der Mischung eines Bismaleinimides und eines Hydroxyphenyl-alkyl-phosphonsäureesters bzw. -halbesters können Stabilisatoren dem Polyamid zugegeben werden. Diese Stabilisatoren sind dem Fachmann allgemein bekannt und werden je nach spezifischer Anforderung an das Endprodukt gewählt werden. Insbesondere können Lichtschutzmittel oder auch Antioxidatien zugesetzt werden ("Plastics Additives Handbook", Ed. R. Gächter and H. Müller, Hanser Verlag, 3. Aufl., 1990; insbesondere S. 82/86 und 255/258).

Als besonders geeignet sind dabei zu erwähnen:
a) Antioxidantien wie
   die Ester von β-(3,5-Di-tert.butyl-4-hydroxyphenyl)-propionsäure und der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-iso-cyanurat, N,N'-Bis-(hydroxyethyl)-oxalsäurediamid, sowie die Amide dieser Säuren, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin und N,N'-Bis-(3,5-di-tert.butyl-4-hydroxyphenylpropionyl)-hydrazin oder auch Tocopherol-Verbindungen.
   Bevorzugt sind dabei Antioxidantien vom Typ Irganox® 1098
   und Irganox® 245
   vorzugsweise in Kombination mit aromatischen Phosphiten oder Phosphoniten. Beispiele für solche Phosphite oder Phosphonite sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Distearylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-4-methylphenoxy)-2,4,8,10-tetraoxa-3,9-diphosphaspiro[5.5]undec an, 3,9-Tris-(2,4,6-tris-tert.butylphenoxy)-2,4,8,10-tetraoxa-3,9-diphosphaspiro[5,5]u ndecan und 2,2'-Ethyliden-bis-(4,6-di-tert.butylphenyl)-fluorophosphit. Besonders bevorzugt ist Irgafos® 168.
b) Lichtschutzmittel wie
   1.2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tertamyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO(CH₂) 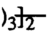 mit R = 3'-tert-Butyl-4'-hydroxy-5'-2H-benzotriazol-2-yl-phenyl.
   2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzyl-phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor- 1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   7. Oxalsäurediamide, wie z.B. 4,4'-Di-octyloxy-oxanilid, 2,2'-Di-ethoxy-oxanilid, 2,2'-Di-octyloxy-5,5-di-tert-butyl-oxanilid, 2,2'-Di-dodecyloxy-5-5'-di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   8.2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)- 1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Bevorzugt sind dabei Lichtschutzmittel aus den Klassen 1, 6 und 7 wie beispielsweise Lichtschutzmittel vom Typ Chimassorb® 944, Chimassorb® 119, Tinuvin® 234, Tinuvin® 312 oder Tinuvin® 770.

Ebenso möglich ist die Zugabe von weiteren Zusatzstoffen, wie beispielsweise Gleitmittel, Entformungsmittel, Flammschutzmittel, Antistatica, Füllstoffe oder Verstärkungsstoffe wie z.B. Glasfasern.

Handelt es sich bei dem Polyamid um ein Recyclat, so kann es auch gemischt mit Neumaterial oder zusammen mit Neumaterial, beispielsweise in einem Coextrusionsverfahren eingesetzt werden.

Ein weiterer Gegenstand der Erfindung ist die Verwendung einer Mischung enthaltend ein Bismaleinimid und einen Hydroxyphenyl-alkyl-phosphonsäureester bzw. -halbester zur Molekulargewichtserhöhung von Neu-Polyamid oder Polyamid-Recyclaten. Die Bevorzugungen der Verwendung entsprechen denen für das Verfahren.

Ein weiterer Gegenstand der Erfindung sind Mischungen enthaltend ein Polyamid, ein Bismaleinimid und einen Hydroxyphenyl-alkyl-phosphonsäureester bzw. -halbester. Die Bevorzugungen der Mischungen entsprechen denen für das Verfahren.

Die folgenden Beispiele erläutern die Erfindung näher, ohne sie darauf zu beschränken. Teile und Prozente beziehen sich, wie auch in der übrigen Beschreibung, auf das Gewicht, sofern nicht anders angegeben.

### Beispiele 1-6:

In einem Plasticorder der Fa. Brabender mit Mischkammer W 50 wird unter Stickstoff bei einer Temperatur von 232°C ein Polyamid 6 (Durethan® B30 S der Firma Bayer) über einen Zeitraum von 30 Minuten geknetet und das Drehmoment bestimmt. Im Anschluss wird die reduzierte Viskosität und die Melt-Volume-Rate gemessen. Man bestimmt die reduzierte Viskosität durch Messung einer Lösung von 0,25 g des Polymeren in 100 g o-Dichlorbenzol/Phenol (1:1) bei 30°C. Es werden die in der Tabelle 1 angegebenen Werte erhalten.

Es werden die folgenden Verbindungen verwendet:

### BMI-1: 4,4'-Diphenylmethanbismaleinimid

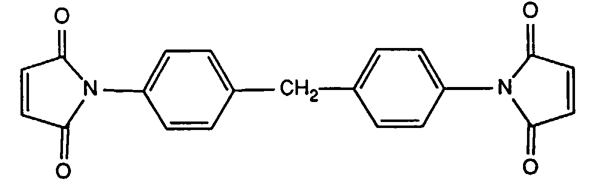

Die sterisch gehinderten Phenole sind:

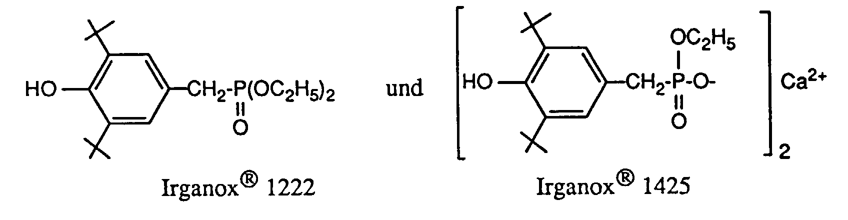

**Tabelle 1:**

| Molekulargewichtserhöhung von Polyamid 6 | | | | | |
|---|---|---|---|---|---|
| | Teile pro 100 Teile PA 6 gehindertes Phenol | Teile pro 100 Teile PA 6 Bismaleinimid | Drehmoment nach 30 min (Nm) | red. Visk. (dl/g) | MVR 225/2,16 cm³/10 min |
| Bsp. 1 | 0,5 Irganox 1425 | 0,5 BMI-1 | 9,5 | 2,84 | 5,5 |
| 2 | 0,25 Irganox 1425 | 0,5 BMI-1 | 9,9 | 2,72 | 6,6 |
| 3 | 0,5 Irganox 1222 | 0,5 BMI-1 | 12,9 | 3,28 | 4,5 |
| 4 | 0,25 Irganox 1222 | 0,5 BMI-1 | 10,0 | - | 6,5 |
| 5 | 0,25 Irganox 1425 | 0,25 BMI-1 | 7,7 | - | - |
| 6 | 0,25 Irganox 1222 | 0,25 BMI-1 | 8,1 | - | - |
| V1 | 1 Irganox 1425 | - - | 5,8 | 1,84 | 13,1 |
| V2 | - | 1 BMI-1 | 7,5 | 2,40 | 8,2 |

Der Anstieg des Drehmomentes und der reduzierten Viskosität, sowie die Abnahme der Melt-Volume-Rate (bestimmt in Analogie zu ISO 1133) zeigen eine deutliche Molekulargewichtserhöhung bei den erfindungsgemäss behandelten Proben der Beispiele 1-6.

### Beispiele 7 und 8:

In einem Doppelschnecken extruder (Haake Rheocord 90) wird ein Polyamid-6 (Durethan B 30 S, MVR = 30, vorgetrocknet bei 100°C) bei 230°C und 25 Upm mit den in Tabelle 2 angegebenen Zusätzen verarbeitet. Die Abnahme des MVR (bestimmt in Analogie zu ISO 1133) belegt die Molekulargewichtszunahme der gemäss dem erfindungsgemässen Verfahren hergestellten Polymere.

**Tabelle 2:**

| Molekulargewichtserhöhung von Polyamid 6 | | | |
|---|---|---|---|
| | Teile pro 100 Teile PA 6 gehindertes Phenol | Teile pro 100 Teile PA 6 Bismaleinimid | MVR 235/2,16 cm³/10 min |
| Bsp. V3 | - - | - - | 29,3 |
| V4 | 0,25 Irganox 1425 | - - | 30 |
| V5 | 0,25 Irganox 1222 | - - | 31,7 |
| V6 | - - | 0,5 BMI-1 | 26,1 |
| 7 | 0,25 Irganox 1425 | 0,5 BMI-1 | 13,6 |
| 8 | 0,25 Irganox 1222 | 0,5 BMI-1 | 17,8 |

### Beispiel 9:

In einem Doppelschnecken extruder (Haake Rheocord 90) wird bei 230°C und 35 Upm Polyamid-6-Produktionsabfall (aus der Herstellung von lackierten Radzierblenden, ca. 25 % Glasfasergehalt) mit den in Tabelle 3 angegebenen Zusätzen verarbeitet. Die Abnahme des MVR (bestimmt in Analogie zu ISO 1133) und die Zunahme der reduzierten Viskosität belegen die Molekulargewichtszunahme des gemäss dem erfindungsgemässen Verfahren behandelten Recyclates.

**Tabelle 3:**

| Molekulargewichtserhöhung von Polyamid (Produktionsabfall) | | | | | | |
|---|---|---|---|---|---|---|
| | Teile pro 100 Teile PA 6 gehindertes Phenol | | Teile pro 100 Teile PA 6 Bismaleinimid | | red. Visk.* (dl/g) | MVR 230/2,16cm³/10 min |
| Bsp. V7 | - | -- | - | - | 1,04 | 9,0 |
| 9 | 0,25 | Irganox 1225 | 0,5 | BMI-1 | 1,24 | 3,9 |

| | | | | | | |
|---|---|---|---|---|---|---|
| * nicht für Glasfasergehalt korrigiert | | | | | | |

## Patentansprüche

1. Verfahren zur Molekulargewichtserhöhung von Polyamiden, dadurch gekennzeichnet, dass man ein Polyamid unter Zusatz eines Bismaleinimides und eines sterisch gehinderten Hydroxyphenyl-alkyl-phosphonsäureesters bzw. -halbesters oberhalb des Schmelzpunktes bei Kristallinen Polyamidtypen bzw. Glaspunktes bei amorphen Polyamidtypen des Polyamids erhitzt.

2. Verfahren gemäss Anspruch 1, dadurch gekennzeichnet, dass das Polyamid ein Polyamid-Recyclat ist

3. Verfahren gemäss Anspruch 1, dadurch gekennzeichnet, dass das Bismaleinimid eine Verbindung der Formel (I) 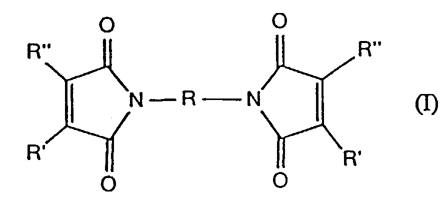 ist, wobei R ein aliphatischer, aromatischer, cycloaliphatischer oder heterocyclischer Rest; und
R' und R" unabhängig voneinander Wasserstoff, C₁-C₄-Alkyl, C₁-C₆-Alkoxy, Phenyl oder Phenyloxy bedeuten.

4. Verfahren gemäss Anspruch 1, dadurch gekennzeichnet, dass das Bismaleinimid eine Verbindung der Formel (I) 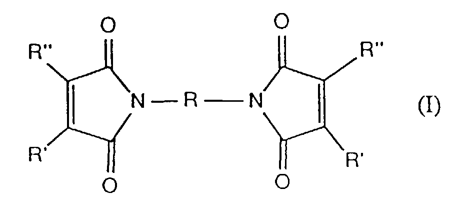 ist, wobei R einen aromatischen Rest einer der Formeln: 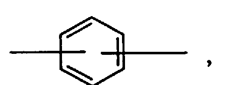 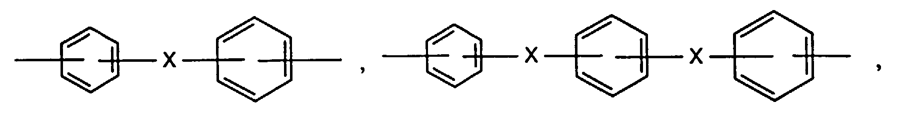 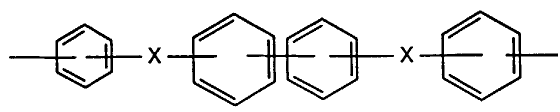 oder 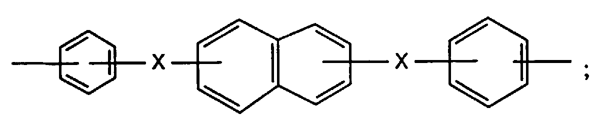 wobei X einen der Reste -CH₂-, -C(O)-, -P(O)(C₁-C₁₈-Alkyl)-, -S(O₂)-, -O- oder -S-; und
R' und R'' unabhängig voneinander Wasserstoff, C₁-C₄-Alkyl, C₁-C₆-Alkoxy, Phenyl oder Phenyloxy bedeuten.

5. Verfahren gemäss Anspruch 3, dadurch gekennzeichnet, dass die Reste R' und R'' in Formel (I) Wasserstoff sind.

6. Verfahren gemäss Anspruch 1, dadurch gekennzeichnet, dass der sterisch gehinderte Hydroxyphenyl-alkyl-phosphonsäureester bzw. -halbester der Formel 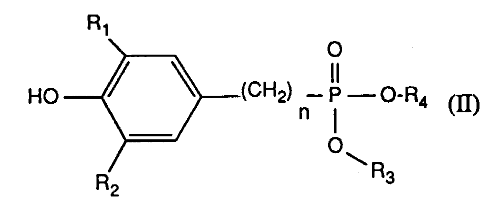 entspricht, worin
R₁ iso-Propyl, tert.-Butyl, Cyclohexyl oder mit 1-3 C₁-C₄-Alkylgruppen substituiertes Cyclohexyl;
R₂ H, C₁-C₄-Alkyl, Cyclohexyl oder mit 1-3 C₁-C₄-Alkylgruppen substituiertes Cyclohexyl;
R₃ C₁-C₂₀-Alkyl oder substituiertes oder unsubstituiertes Phenyl oder Naphthyl;
R₄ H, M²⁺/2, C₁-C₂₀-Alkyl oder substituiertes oder unsubstituiertes Phenyl oder Naphthyl;
M²⁺ ein zweiwertiges Metallkation und
n 1-6
bedeuten.

7. Verfahren gemäss Anspruch 1, dadurch gekennzeichnet, dass der sterisch gehinderte Hydroxyphenyl-alkyl-phosphonsäureester bzw. -halbester eine Verbindung der Formel 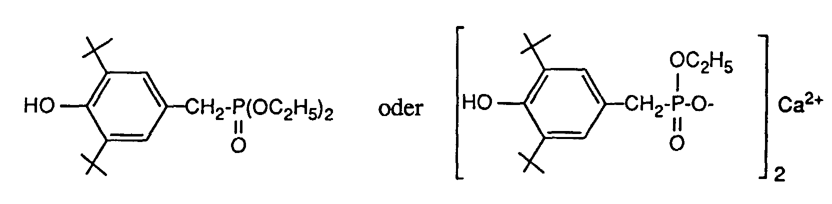 ist.

8. Verfahren gemäss Anspruch 1, dadurch gekennzeichnet, dass man 0,05 bis 10 Teile des Bismaleinimides und 0,01 bis 5 Teile des sterisch gehinderten Hydroxyphenyl-alkyl-phosphonsäureesters bzw. -halbesters je 100 Teile Polyamid verwendet.

9. Verfahren gemäss Anspruch 1, dadurch gekennzeichnet, dass man als Polyamid Polyamid-6 oder Polyamid-6.6 oder Mischungen davon einsetzt.

10. Verwendung einer Mischung enthaltend ein Bismaleinimid und einen sterisch gehinderten Hydroxyphenyl-alkyl-phosphonsäureester bzw. -halbester zur Molekulargewichtserhöhung von Neu-Polyamid oder Polyamid-Recyclaten.

11. Mischung enthaltend ein Bismaleinimid, einen sterisch gehinderten Hydroxyphenyl-alkyl-phosphonsäureester bzw. -halbester und ein Neu-Polyamid oder Polyamid-Recyclat.

## Claims

1. A process for increasing the molecular weight of polyamides, which comprises heating a polyamide, with addition of a bismaleimide and a sterically hindered hydroxyphenyl-alkyl-phosphonic acid ester or half-ester, above the melting point, in the case of crystalline polyamide types, or glass transition point, in the case of amorphous polyamide types, of the polyamide.

2. The process according to claim 1, wherein a polyamide recycled material is used as the polyamide.

3. The process according to claim 1, wherein the bismaleimide is a compound of the formula (I) 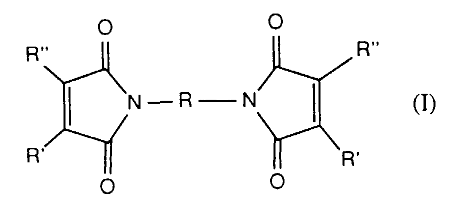 in which R is an aliphatic, aromatic, cycloaliphatic or heterocyclic radical; and
R' and R" independently of one another are hydrogen, C₁-C₄alkyl, C₁-C₆alkoxy, phenyl or phenyloxy.

4. The process according to claim 1, wherein the bismaleimide is a compound of the formula (I) 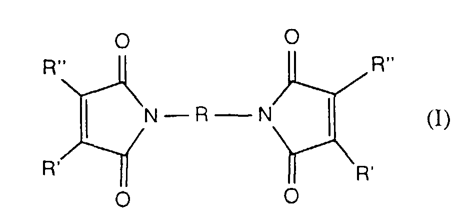 in which R is an aromatic radical of one of the formulae: 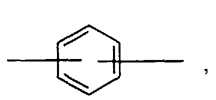 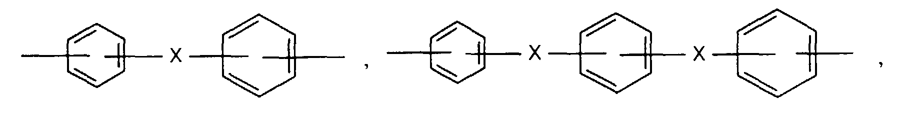 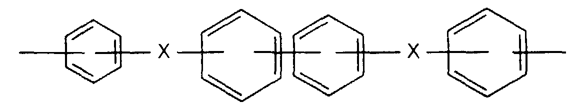 or 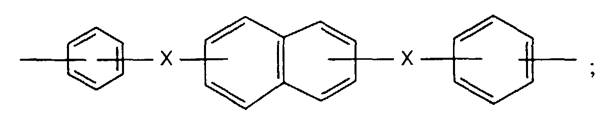 in which X is one of the radicals -CH₂-, -C(O)-, -P(O)(C₁-C₁₈alkyl)-, -S(O₂)-, -O- or -S-; and
R' and R" independently of one another are hydrogen, C₁-C₄alkyl, C₁-C₆alkoxy, phenyl or phenyloxy.

5. The process according to claim 3, wherein the radicals R' and R" in formula (I) are hydrogen.

6. The process according to claim 1, wherein the sterically hindered hydroxyphenyl-alkyl-phosphonic acid ester or half-ester has the formula 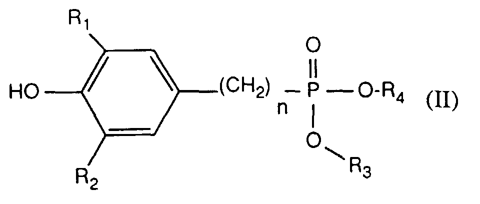 in which
R₁ is iso-propyl, tert-butyl, cyclohexyl or cyclohexyl which is substituted by 1-3 C₁-C₄alkyl groups;
R₂ is H, C₁-C₄alkyl, cyclohexyl or cyclohexyl which is substituted by 1-3 C₁-C₄alkyl groups;
R₃ is C₁-C₂₀alkyl or phenyl or naphthyl which is substituted or unsubstituted;
R₄ is H, M²⁺/2, C₁-C₂₀alkyl or substituted or unsubstituted phenyl or naphthyl;
M²⁺ is a divalent metal cation and
n is 1-6.

7. The process according to claim 1, wherein the sterically hindered hydroxyphenyl-alkyl-phosphonic acid ester or half-ester is a compound of the formula

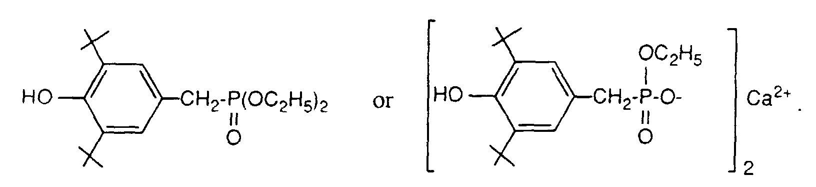

8. The process according to claim 1, wherein 0.05 to 10 parts of the bismaleimide and 0.01 to 5 parts of the sterically hindered hydroxyphenyl-alkyl-phosphoric acid ester or half-ester are used per 100 parts of polyamide.

9. The process according to claim 1, wherein polyamide 6 or polyamide 6.6 or a mixture thereof is employed as the polyamide.

10. The use of a mixture comprising a bismaleimide and a sterically hindered hydroxyphenyl-alkyl-phosphonic acid ester or half-ester for increasing the molecular weight of virgin polyamide or recycled polyamide material.

11. A mixture comprising a bismaleimide, a sterically hindered hydroxyphenyl-alkyl-phosphonic acid ester or half-ester and a virgin polyamide or recycled polyamide material.

## Revendications

1. Procédé pour augmenter la masse moléculaire de polyamides, caractérisé en ce qu'on chauffe un polyamide, par addition d'un bismaléimide et d'un ester ou d'un semi-ester d'un acide hydroxyphénylalkylphosphoneux à empêchement stérique, au-delà de point de fusion du polyamide dans le cas des polyamides de type cristallin, ou au-delà de la température de transition vitreuse du polyamide dans le cas des polyamides de type amorphe.

2. Procédé selon la revendication 1, caractérisé en ce que le polyamide est un polyamide recyclé.

3. Procédé selon la revendication 1, caractérisé en ce que le bismaléimide est un composé de formule (I) 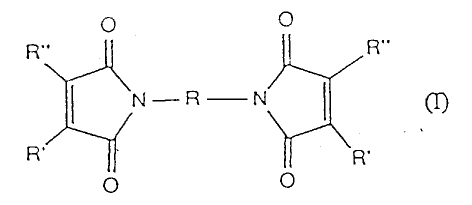 dans laquelle R est un résidu aliphatique, aromatique, cycloaliphatique ou hétérocyclique ; et
R' et R", indépendamment l'un de l'autre, sont chacun un hydrogène ou un groupe alkyle en C₁-C₄, alcoxy en C₁-C₆, phényle ou phényloxy.

4. Procédé selon la revendication 1, caractérisé en ce que le bismaléimide est un composé de formule (I) 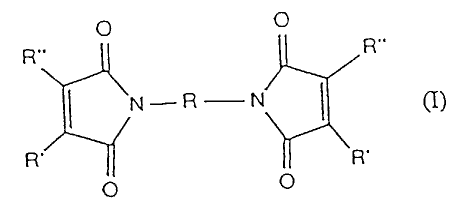 dans laquelle R est un radical aromatique ayant l'une des formules suivantes : 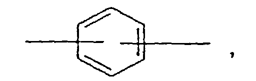 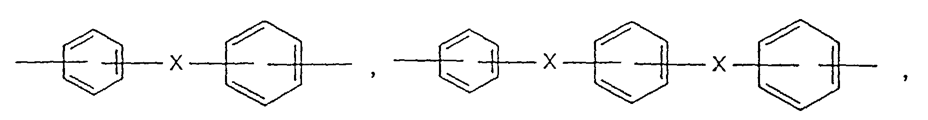 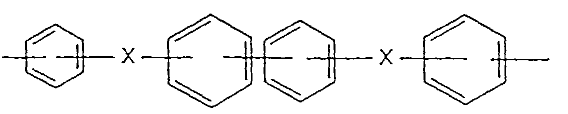 ou 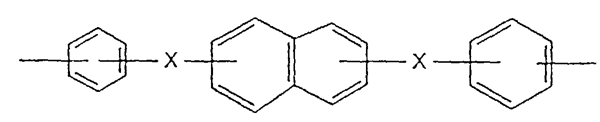 où X est l'un des radicaux -CH₂-, -C(O)-, -P(O)(alkyle en C₁-C₁₈)-, -S(O₂)-, -O- ou -S- ; et R' et R", indépendamment l'un de l'autre, sont chacun un hydrogène ou un groupe alkyle en C₁-C₄, alcoxy en C₁-C₄, phényle ou phényloxy.

5. Procédé selon la revendication 3, caractérisé en ce que les radicaux R' et R", dans la formule 1, sont des hydrogènes.

6. Procédé selon la revendication 1, caractérisé en ce que l'ester ou le semi-ester d'un acide hydroxyphénylalkylphosphoneux à empêchement stérique correspond à la formule suivante : 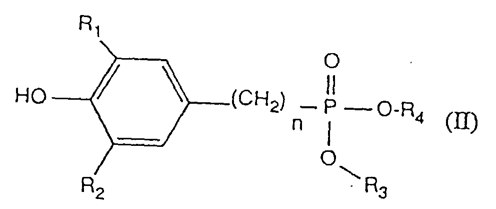 dans laquelle
R¹ est un groupe isopropyle, tert-butyle, cyclohexyle, ou cyclohexyle substitué par 1 à 3 groupes alkyle en C₁-C₄ ;
R² est H ou un groupe alkyle en C₁-C₄, cyclohexyle ou cyclohexyle substitué par 1 à 3 groupes alkyle en C₁-C₄ ;
R³ est un groupe alkyle en C₁-C₂₀, ou phényle ou naphtyle substitué un substitué ;
R⁴ est H, M²⁺/2, ou un groupe alkyle en C₁-C₂₀ ou phényle ou naphtyle substitué ou non substitué ;
M²⁺ est un cation d'un métal divalent, et
n vaut 1 à 6.

7. Procédé selon la revendication 1, caractérisé en ce que l'ester ou le semi-ester d'un acide hydroxyphénylalkylphosphoneux à empêchement stérique est un composé de formule :

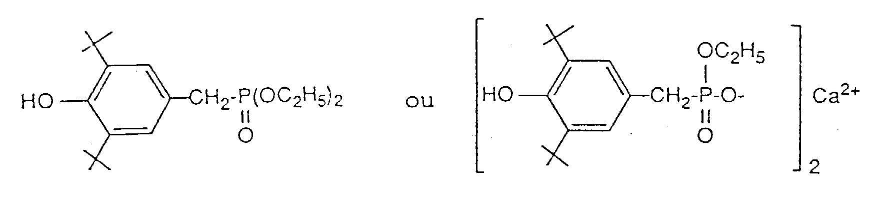

8. Procédé selon la revendication 1, caractérisé en ce qu'on utilise de 0,05 à 10 parties du bismaléimide et de 0,01 à 5 parties de l'ester ou du semi-ester d'un acide hydroxyphénylalkylphosphoneux à empêchement stérique pour 100 parties de polyamide.

9. Procédé selon la revendication 1, caractérisé en ce qu'on utilise comme polyamide le polyamide 6 ou le polyamide 6.6 ou leurs mélanges.

10. Utilisation d'un mélange contenant un bismaléimide et un ester ou un semi-ester d'un acide hydroxyphénylalkylphosphoneux à empêchement stérique, pour augmenter la masse moléculaire d'un polyamide neuf ou d'un polyamide recyclé.

11. Mélange contenant un bismaléimide, un ester ou un semi-ester d'un acide hydroxyphénylalkylphosphoneux à empêchement stérique, et un polyamide neuf ou un polyamide recyclé.
